# EUROPÄISCHE PATENTSCHRIFT

(11) **EP 2 222 582 B1**
(45) Veröffentlichungstag und Bekanntmachung des Hinweises auf die Patenterteilung: **08.08.2012**
(21) Anmeldenummer: 08864078.4
(22) Anmeldetag: 04.12.2008
(51) Int. Cl.: B65G 47/51, B65G 47/71

(54) **ARTIKELPUFFER**
ARTICLE BUFFER
ZONE TAMPON D'ARTICLES

(30) Priorität: 24.12.2007 DE 102007062652
(43) Veröffentlichungstag der Anmeldung: 01.09.2010
(73) Patentinhaber: Krones AG, 93073 Neutraubling (DE)
(72) Erfinder: HAHN, Wolfgang, 93093 Donaustauf (DE)
(74) Vertreter: Grünecker, Kinkeldey, Stockmair & Schwanhäusser
(86) Internationale Anmeldenummer: PCT/EP2008/010298
(87) Internationale Veröffentlichungsnummer: WO 2009/080184

(56) Entgegenhaltungen:
- EP-A- 0 310 102
- DE-A1- 3 444 462
- JP-A- 2006 117 347
- NL-A- 7 707 169

## Beschreibung

Die Erfindung betrifft ein Verfahren zur Produktumstellung in einer Abfüllanlage und ein Puffersystem zur Durchführung eines solchen Verfahrens gemäß dem Oberbergriff des Anspruchs 10. Ein derartiges Puffersystem ist bereits aus EP-A-O 310 102 bekannt. Die Produktumstellung in z. B einer Getränkeabfüllanlage auf eine Flasche mit einem anderen Etikett erfordert üblicherweise einen Stillstand der Produktion. Dabei wird die Produktionsmaschine leer gefahren, auf ein neues Etikett umgestellt und die Produktionsmaschine neu gestartet. Der Stillstand verursacht eine Lücke im Produktionsstrom, die für nachfolgende Maschinen - zum Beispiel eine Verpackungsmaschine - zwar zur Umstellung auf ein anderes Verpackungsmaterial genutzt werden kann, trotzdem geht die Dauer des Stillstands als Produktionszeit verloren.

Problemlösungen zur Verringerung von Ausfallzeiten wurden bereits im Zusammenhang mit Störungen an Produktionsmaschinen beschrieben. So ist zum Beispiel ein Verfahren für den automatischen Betrieb einer Pufferstrecke bekannt, bei dem Flaschen bei einem Stau vor einer Etikettiermaschine in einen Seitenarm der Förderstrecke umgeleitet werden. Nach Behebung der Störung und Beseitigung des Staus wird der Seitenarm mit erhöhter Geschwindigkeit in die Etikettiermaschine entleert, während nachrückende Flaschen weiterhin in den Seitenarm geleitet werden. Sind alle zuvor angesammelten Flaschen aus dem Seitenarm abtransportiert worden, werden Ein- und Ausgang des Seitenarms geschlossen, und der Normalbetrieb wird wieder aufgenommen. Die Anzahl der im Seitenarm verbliebene Flaschen kann durch Wiederholung des Verfahrens sukzessive reduziert werden.

Außerdem ist eine Flaschenbehandlungsanlage bekannt, bei der eine Füllmaschine kontrolliert leer gefahren werden kann, um den Zustrom zu einer defekten Etikettiermaschine zu unterbrechen. Zu diesem Zweck ist die Füllmaschine im Normalbetrieb durch eine erste Förderbahn mit der Etikettiermaschine verbunden. Am Eingang der Förderbahn ist eine Umlenkvorrichtung angeordnet, die den Flaschenstrom bei einer Störung der Etikettiermaschine in eine zweite, parallel verlaufende Förderbahn leitet. Gleichzeitig wird je eine Flaschensperre an den stromabwärts gelegenen Enden der Förderbahnen geschlossen und der Zustrom neuer Flaschen in die Füllmaschine unterbrochen. Die zweite Förderbahn dient somit dazu, die bereits in der Füllmaschine befindlichen Flaschen aufzunehmen. Nach Behebung der Störung wird zunächst die Flaschensperre der zweiten Förderbahn geöffnet und die darin befindlichen Flaschen werden in die Etikettiermaschine geleitet. Danach wird der Normalbetrieb wieder aufgenommen.

Keines dieser bekannten Verfahren kann jedoch Ausfallzeiten der Abfüllanlage bei Produktumstellungen an einer Produktionsmaschine reduzieren oder gänzlich vermeiden.

Der Erfindung liegt somit das technische Problem zugrunde, hier Abhilfe zu schaffen.

Dieses technische Problem wird erfindungsgemäß durch folgende Verfahrenschritte gelöst:
- a) Zufördern eines ersten Produkts in einen Primärpuffer mit einer Zufördervorrichtung und Abfördern des ersten Produkts aus dem Primärpuffer mit einer Abfördervorrichtung;
- c) Ausleiten eines zweiten Produkts von der Zufördervorrichtung in einen Sekundärpuffer, und gleichzeitiges Abfördern des im Primärpuffer befindlichen ersten Produkts mit der Abfördervorrichtung bis der Primärpuffer less ist;
- e) Abfördern des im Sekundärpuffer befindlichen zweiten Produkts mit der Abfördervorrichtung; und
- f) Zufördern des zweiten Produkts in den Primärpuffer mit der Zufördervorrichtung, und Abfördern des zweiten Produkts aus dem Primärpuffer mit der Abfördervorrichtung.

Dies ermöglicht eine eindeutige Trennung der Produkte im Produktionsprozess und einen Betrieb der Zufördereinrichtung und der Abfördereinrichtung mit unterschiedlichen Geschwindigkeiten, um z.B. eine schnelle Maschine mit langen Umstellungszeiten an eine langsame Maschine mit kurzen Umstellungszeiten anzupassen.

Günstigerweise kann vor dem Schritt c) ein zusätzlicher Schritt b) ausgeführt werden, in dem eine von der Zufördervorrichtung aus gesehen stromaufwärts angeordnete Produktionsmaschine auf das zweites Produkt umgestellt wird. Dies stellt sicher, dass zunächst alle Einheiten des ersten Produkts und danach alle Einheiten des zweiten Produkts zugefördert werden.

Vorteilhafterweise ist es möglich, dass die stromaufwärts angeordnete Produktionsmaschine bei der Produktumstellung ohne Unterbrechung weiter produziert. Dadurch lässt sich ein im wesentlichen kontinuierlicher Produktstrom während der Umstellung erzielen. Dies minimiert Ausfallzeiten, besonders an vergleichsweise langsamen Maschinen.

Günstigerweise kann die Produktumstellung im Schritt b) an einer Etikettiermaschine erfolgen. Etikettiermaschinen eignen sich besonders für einen fliegenden Produktwechsel, weil sie mit mehreren Etikettieraggregaten versehen werden können und während der Produktion unterbrechungsfrei zwischen den Aggregaten umgeschaltet werden kann, um unterschiedlich etikettierte Artikel zu erhalten.

Vorzugsweise kann nach der Entleerung des Primärpuffers im Schritt c) ein zusätzlicher Schritt d) durchgeführt werden, in dem eine von der Abfördervorrichtung aus gesehen stromabwärts angeordnete Produktionsmaschine auf das zweites Produkt umgestellt wird. Dadurch wird sichergestellt, dass die Produkte korrekt weiterverarbeitet werden.

Vorteilhafterweise kann die stromabwärts angeordnete Produktionsmaschine während des Schritts e) in Überleistung betrieben werden, so dass das zweite Produkt schneller aus dem Sekundärpuffer abgefördert wird als es in den Sekundärpuffer eingeleitet wird. Dadurch ist es möglich, bei einer vergleichsweise schnellen Maschine einen gegebenenfalls nötigen Stillstand während der Produktumstellung zu kompensieren.

Günstigerweise kann die Produktumstellung im Schritt d) an einer Verpackungsmaschine erfolgen. Verpackungsmaschinen können vergleichsweise schnell betrieben werden, um Standzeiten zu kompensieren.

Vorteilhafterweise können sich mindestens zwei Verfahrensschritte zeitlich teilweise überlappen. Dadurch lassen sich Lücken im Produktstrom reduzieren.

Vorteilhafterweise kann die Zufördervorrichtung kontinuierlich betrieben werden. Dies ermöglicht eine optimale Auslastung des Puffersystems.

Das zugrunde liegende technische Problem, wird erfindungsgemäß ferner durch ein Puffersystem nach Anspruch 10 gelöst.

In einer vorteilhaften Ausführungsform kann die ausgangsseitige Weiche mit einer Steuereinheit verbunden werden, die die Stellung der Weiche ändert, um aus dem Puffersystem anstelle eines ersten Produkts ein zweites Produkt abzufördern. Dadurch wird eine automatische und korrekte Umstellung auf das zweite Produkt möglich.

In einer weiteren vorteilhaften Ausführungsform können die eingangsseitige Weiche und die ausgangsseitige Weiche mit einer Steuereinheit verbunden werden, die die Stellung der Weichen jeweils ändert, wenn das zweite Produkt aus dem Primärpuffer abgefördert werden soll. Dadurch wird ein kontinuierlicher Produktstrom nach Leerung des Sekundärpuffers sichergestellt.

Eine besonders günstige Ausführungsform kann eine zwischen der Zufördervorrichtung und der Abfördervorrichtung parallel angeordnete mittlere Fördervorrichtung und ein im wesentlichen über der mittleren Fördervorrichtung angeordnetes inneres Führungsgeländer umfassen, wobei das Führungsgeländer den Primärpuffer vom Sekundärpuffer trennt, so dass zumindest eine der Fördervorrichtungen sowohl einen Bereich des Primärpuffers als auch einen Bereich des Sekundärpuffers bildet. Mit dieser Anordnung lassen sich funktionelle Puffer mit einem vergleichsweise geringen technischen und wirtschaftlichen Aufwand realisieren.

Vorteilhafterweise ist die Geschwindigkeit der abführenden Fördervorrichtung variabel, so dass deren Förderleistung an die Überleistung einer stromabwärts angeordneten Produktionsmaschine angepasst werden kann. Dadurch lassen sich Standzeiten der Produktionsmaschine optimal kompensieren.

Eine besonders günstige Ausführungsform umfasst eine eingangsseitige Überwachungsvorrichtung, die überwacht, ob dem Puffersystem ein erstes Produkt oder ein zweites Produkt zugefördert wird. Dadurch lässt sich die Fehlerrate der eingangsseitige Weiche minimieren.

Eine besonders günstige Ausführungsform umfasst eine ausgangsseitige Überwachungsvorrichtung, die den Füllungsgrad des Sekundärpuffers überwacht. Damit lässt sich eine Lücke im Produktstrom des zweiten Produkts vermeiden, wenn der Sekundärpuffer vollständig entleert ist.

Vorteilhafterweise umfasst die eingangsseitige und die ausgangsseitige Weiche jeweils ein schwenkbares Führungsgeländer. Damit lassen sich funktionelle und kostengünstige Weichen realisieren.

Ein Ausführungsbeispiel der Erfindung ist in der Zeichnung dargestellt und wird nachstehend erläutert. Es zeigen:
- Figur 1: eine schematische Draufsicht auf ein Ausführungsbeispiel eines erfindungsgemäßen Puffersystems;
- Figur 2: den zeitlichen Verlauf der Produktmengen im Primärpuffer und im Sekundärpuffer beim erfindungsgemäßen Verfahren als schematisches Diagramm; und
- Figur 3: den zeitlichen Verlauf der Produktmengen im Primärpuffer und im Sekundärpuffer einer Variante des erfindungsgemäßen Verfahrens als schematisches Diagramm.

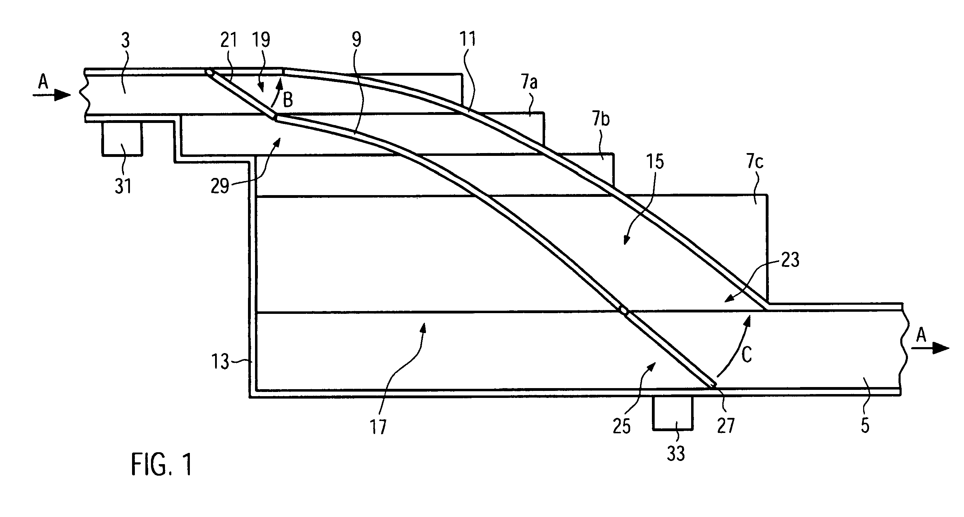

Das in Figur 1 dargestellte Puffersystem 1 ist bevorzugt zwischen einer nicht dargestellten Etikettiermaschine und einer nachgelagerten, ebenfalls nicht gezeigten Behandlungsmaschine, z. B. einer Packmaschine angeordnet. Die Etikettiermaschine kann wenigstens zwei im Produktionsbetrieb unterbrechungsfrei umschaltbare Etikettieraggregate zum Aufbringen unterschiedlicher Etiketten aufweisen.

Wie in Figur 1 gezeigt umfasst das Puffersystem 1 eine Zufördervorrichtung 3, eine im wesentlichen parallel dazu verlaufende Abfördereinrichtung 5 sowie eine zwischen der Zufördervorrichtung und der Abfördervorrichtung angeordnete mittlere Fördervorrichtung 7a - 7c. Die Fördervorrichtungen 3, 5 und 7a - 7c werden durch Motoren (nicht gezeigt) in einer gemeinsamen, durch den Pfeil A symbolisierten Laufrichtung, aber gegebenenfalls mit unterschiedlichen Geschwindigkeiten angetrieben. Über der mittleren Fördervorrichtung 7a - 7c ist schräg zur Laufrichtung ein inneres Führungsgeländer 9 angeordnet. Am äußeren Rand der Fördervorrichtungen 3, 5 und 7a - 7c verläuft außerdem ein äußeres Führungsgeländer 11. Mit 13 ist der Rahmen des Puffersystems bezeichnet.

Der von dem inneren Führungsgeländer 9 und dem äußeren Führungsgeländer 11 begrenzte Bereich der Fördervorrichtungen 3, 5 und 7a - 7c bildet einen Primärpuffer 15, während der von dem inneren Führungsgeländer 9 und dem Rahmen 13 begrenzte Bereich der Fördervorrichtungen 3, 5 und 7a - 7c den Sekundärpuffer 17 bildet. Somit erstrecken sich beide Puffer 15, 17 zumindest teilweise über die selben Fördervorrichtungen 3, 5 und 7a - 7c.

Auf Höhe des Einlauftiereichs 19 des Primärpuffers 15 ist am Führungsgeländer 11 eine in Richtung des Pfeils B schwenkbare einlaufseitige Weiche 21 befestigt. Eine weitere, in Richtung des Pfeils C schwenkbare auslaufseitige Weiche 27 befindet sich zwischen den Auslaufbereichen 23 bzw. 25 des Primärpuffers 15 bzw. des Sekundärpuffers 17.

In Figur 1 ist die Weiche 21 in einer Position, in der die Zufördervorrichtung 3 mit dem Einlaufbereich 29 des Sekundärpuffers 17 verbunden ist. Wenn die Weiche dagegen zurückgeschwenkt ist, laufen die auf dem Zuförderband ankommenden Behälter (Flaschen) in den Einlaufbereich 19 des Primärpuffers 15 ein.

In Figur 1 ist ferner die auslaufseitige Weiche 27 so eingestellt, dass der Auslaufbereich 25 des Sekundärpuffers 17 verschlossen ist. Die Weiche kann aber auch eine Stellung einnehmen, in der der Auslaufbereich 25 des Sekundärpuffers 17 offen, d.h. mit der Abfördervorrichtung 5 verbunden ist.

Stromaufwärts von der Weiche 21 ist eine eingangsseitige Überwachungsvorrichtung 31 angeordnet, die erkennt, ob ein erstes oder ein zweites Produkt (nicht gezeigt) angefördert wird. Ferner ist eine ausgangsseitige Überwachungsvorrichtung 33 auf Höhe des Auslaufbereichs 25 des Sekundärpuffers 17 angeordnet, die den Füllungsgrad des Sekundärpuffers 17 erkennt.

Mit dieser Anordnung lassen sich getrennte Puffer auf funktionelle und wirtschaftliche Weise mit einer geringen Zahl von Förderbändern realisieren. Die Produkte können bei einem Produktwechsel sauber getrennt und seriell aus den Puffern abgefördert werden.

Die Fördervorrichtungen 3, 5 und 7a - 7c sind zum Beispiel motorbetriebene Förderbänder, die zusammen eine tischförmige Pufferfläche bilden. Die mittlere Fördervorrichtung 7a - 7c muss jedoch nicht, wie in Figur 1 gezeigt, aus drei Förderbändern bestehen. Je nach Größe und Form der Puffer 15, 17 ist eine Kombination aus mehr oder weniger Förderbändern möglich. In Figur 1 erstreckt sich der Primärpuffer 15 im wesentlichen über die Fördervorrichtungen 3 und 7a - 7c und der Sekundärpuffer 17 im wesentlichen über die Fördervorrichtungen 5 und 7a - 7c. Diese Aufteilung ist jedoch nicht zwingend. Vorteilhaft ist, dass zumindest eine der Fördervorrichtungen 3, 5, 7a, 7b und 7c sowohl einen Bereich des Primärpuffers 15 als auch einen Bereich des Sekundärpuffers 17 bildet.

Die Förderbänder 3, 5 und 7a - 7b können ferner unterschiedliche Geschwindigkeiten aufweisen. Zumindest die Geschwindigkeit der Abfördervorrichtung 5 ist variabel. Alternativ zu Förderbändern sind auch andere, gegebenenfalls auch zusätzliche Fördervorrichtungen denkbar. Somit lassen sich sowohl die Verweildauer der Produkte in den Puffern 15, 17 als auch die Geschwindigkeiten der Fördervorrichtungen 3, 5 und 7a - 7c flexibel an die Geschwindigkeiten bzw. Umstellungspausen vor- bzw. nachgeschalteter Produktionsmaschinen anpassen.

Die Führungsgeländer 9 und 11 und auch der Rahmen 13 können zum Beispiel aus einem für die Umlenkung und Führung des jeweiligen Produkts besonders geeigneten Material und Profil geformt sein.

Die Weiche 27 ist bevorzugt an dem inneren Führungsgeländer 9 befestigt. Sie kann jedoch auch am Rahmen 13 befestigt werden. Entscheidend ist, dass sie für den Sekundärpuffer 17 als Flaschensperre wirken kann. Das Umschalten der Weichen 21 und 27 erfolgt mittels einer nicht näher dargestellten Steuereinheit automatisch.

Die Überwachungsvorrichtungen 31, 33 beinhalten geeignete Sensoren und können zum Beispiel optische oder mechanische Schranken sein. Auch kann das Signal der eingangsseitige Überwachungsvorrichtung 31 zum Beispiel mit einer stromaufwärts angeordneten Produktionsmaschine abgeglichen werden, um Produkte korrekt zuordnen zu können.

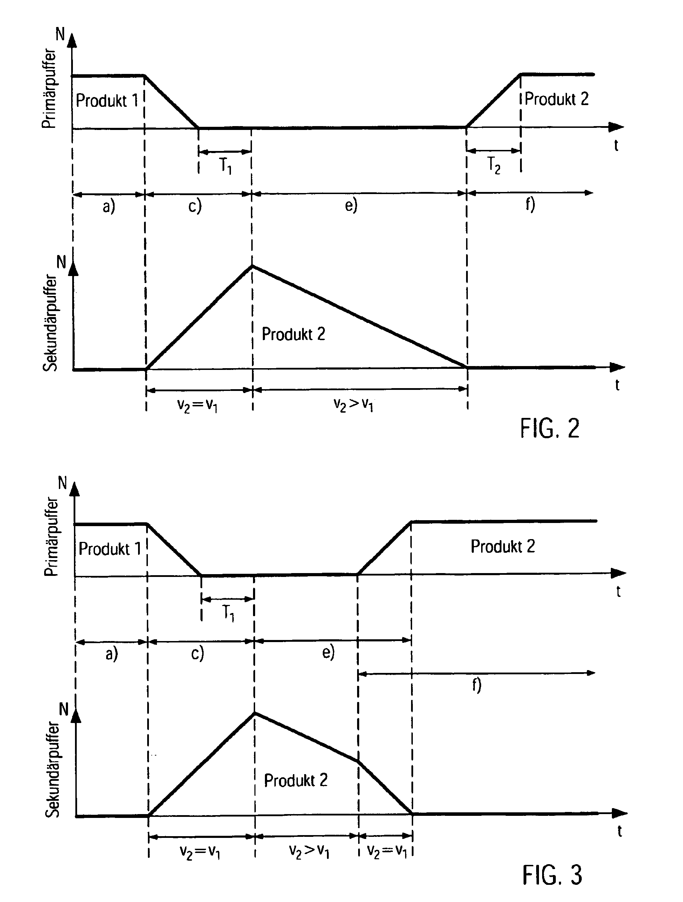

Unter Bezugnahme auf die in den Figuren 2 und 3 dargestellten Diagramme wird nachfolgend beschrieben, wie mit dem erfindungsgemäßen Puffersystem das erfindungsgemäße Verfahren durchgeführt werden kann.

Figur 2 zeigt den Verlauf der Produktmengen N eines ersten Produkts und eines zweiten Produkts im Primärpuffer 15 (oben) und im Sekundärpuffer 17 (unten) während der Verfahrensschritte a), c), e) und f) entlang der Zeitachse t.

Die zu fördernden Produkte sind zum Beispiel Flaschen oder andere Getränkebehälter mit unterschiedlichen Etiketten. Die Produkte können sich jedoch auch durch andere Merkmale unterscheiden.

Die Zufördervorrichtung 3 wird während des gesamten Verfahrens kontinuierlich betrieben, so dass beide Produkte während der jeweiligen Verfahrensschritte kontinuierlich und mit einer vorzugsweise konstanten Geschwindigkeit v₁ zugefördert werden. Die Abförderung erfolgt mit der Geschwindigkeit v₂ mit der Abfördervorrichtung 5, wobei die Abfördergeschwindigkeit auch abhängig von der Zufördergeschwindigkeit ist. Bei Bedarf ist auch eine diskontinuierliche Zuförderung und/oder eine variable Zufördergeschwindigkeit möglich. In diesem Fall ist die Abfördergeschwindigkeit entsprechend an die Zufördergeschwindigkeit anzupassen.

Im Verfahrensschritt a) wird zunächst ein erstes Produkt in den Primärpuffer 15 zugefördert und mit der gleichen Geschwindigkeit wieder aus diesem abgefördert (v₁ = v₂). Daher befindet sich eine im Mittel gleichbleibende Menge des ersten Produkts im Primärpuffer 15. Der Sekundärpuffer 17 ist leer. Der Verfahrensschritt a) endet mit der Zuförderung der letzten Einheit des ersten Produkts.

Der Verfahrensschritt c) beginnt mit der Zuförderung der ersten Einheit eines zweiten Produktes. Dieses wird von der Zufördervorrichtung mit Hilfe der Weiche 21 in den Sekundärpuffer 17 ausgeleitet, dessen Ausgang durch die Weiche 27 zunächst verschlossen ist. Die Menge des zweiten Produkts im Sekundärpuffer 17 nimmt daher kontinuierlich zu. Das noch im Primärpuffer befindliche erste Produkt wird gleichzeitig abgefördert, bis der Primärpuffer 15 leer ist. Auch nach Entleerung des Primärpuffers 15 wird das zweite Produkt weiter in den Sekundärpuffer 17 zugefördert, jedoch nicht aus diesem abgefördert. Dadurch entsteht eine bis zum Ende des Schritts c) dauernde Abförderpause T₁, während der keine Produkte abgefördert werden. Während der Abförderpause T₁ wird das zweite Produkt jedoch weiter in den Sekundärpuffer 17 zugefördert.

Der Verfahrensschritt e) beginnt mit der Abförderung des zweiten Produkts aus dem Sekundärpuffer 17, dessen Ausgang zu diesem Zweck durch Schalten der Weiche 21 geöffnet wird. Dann nimmt, wie dies Fig.2 zeigt, die Menge des zweiten Produkts im Sekundärpuffer 17 in diesem Verfahrensschritt kontinuierlich ab, obwohl das zweite Produkt weiter mit der Geschwindigkeit v₁ zugefördert wird, weil die Abfördergeschwindigkeit v₂ im Schritt e) zumindest zeitweise höher als die Zufördergeschwindigkeit v₁ (v₁ > v₂) gewählt wird. Der Schritt e) ist abgeschlossen, wenn das zweite Produkt vollständig aus dem Sekundärpuffer 17 abgefördert worden ist. Dann kann der Ausgang des Sekundärpuffers 17 durch Umstellen der Weiche 27 wieder verschlossen werden.

Der Verfahrensschritt f) beginnt mit der Zuförderung des zweiten Produkts in den Primärpuffer 15. Hierzu wird die Weiche 21 wieder zurückgestellt, so dass keine Produkte mehr in den Sekundärpuffer 17 eingeleitet werden. Nach einer Abförderpause T₂, die die erste zugeförderte Einheit des zweiten Produkts benötigt, um den Primärpuffer 15 zu durchlaufen, wird das zweite Produkt zu- und abgefördert, wie dies oben für das erste Produkt unter Schritt a) beschrieben wurde.

Mit dem oben beschriebenen Verfahren können zwei Produkte, die nacheinander und im wesentlichen kontinuierlich zugefördert werden, sicher getrennt werden. Die Abförderpause T₁ am Ende des Schritts c) kann dazu genutzt werden, eine stromabwärts angeordnete Produktionsmaschine auf das zweite Produkt umzustellen. Hierbei ist es möglich, die Abförderpause T₁ nachfolgend durch eine erhöhte Abfördergeschwindigkeit zu kompensieren, so dass die Zuförderung der Produkte nicht unterbrochen werden muss.

Fig. 3 zeigt eine Variante des oben beschrieben Verfahrens, bei dem die Schritte e) und f) überlappen. Dadurch kann die zweite Abförderpause T₂ vermieden werden. Ebenso gezeigt ist eine Änderung der Abfördergeschwindigkeit v₂ während des Schritts e), wobei die Geschwindigkeitsänderung mit dem Beginn des Schritts f) zusammenfällt. Es sind jedoch beliebige Kombinationen der in Figur 2 und 3 gezeigten Varianten denkbar, wie zum Beispiel komplexere Änderungen der Geschwindigkeit v₂ oder unterschiedliche Überlappungszeiten. Ebenso denkbar ist eine zeitweise Anpassung der Abfördergeschwindigkeit im Schritt f), um zum Beispiel den Füllungsgrad des Primärpuffers anzupassen. Hierzu könnten zum Beispiel die Geschwindigkeiten der Fördereinrichtungen 3, 5 und 7a - 7c geeignet gestaffelt werden.

Vor dem Schritt c) wird in einem nicht dargestellten Schritt b) eine von der Zufördervorrichtung 3 aus gesehen stromaufwärts angeordnete Etikettiermaschine auf das zweite Produkt umgestellt. Hierzu eignen sich besonders Maschinen, die einen fliegenden Etikettenwechsel ermöglichen, so dass die Etikettiermaschine für einen Produktwechsel nicht leer gefahren werden muss. Dies erlaubt eine kontinuierliche Zuförderung der Produkte. Der Schritt b) kann mit dem Schritt a) überlappen, um eine möglichst lückenlose Zuförderung zu gewährleisten. Die Produktumstellung im Schritt b) kann bei Bedarf auch an einer anderen Produktionsmaschine vorgenommen werden.

Nachdem der Primärpuffer 15 im Schritt c) entleert worden ist, wird in einem nicht dargestellten Schritt d) eine von der Abfördervorrichtung 5 aus gesehen stromabwärts angeordnete Verpackungsmaschine auf das zweite Produkt umgestellt. Hierzu eignen sich besonders Maschinen mit ausreichender Überkapazität, so dass sie während des Schritts e) in Überleistung betrieben werden können, um das zweite Produkt schneller aus dem Sekundärpuffer 17 abzufördern als es in den Sekundärpuffer 17 eingeleitet wird. Die Produktumstellung im Schritt d) kann bei Bedarf auch an einer anderen Produktionsmaschine vorgenommen werden.

Das Verfahren ermöglicht einen Produktwechsel mit einer sicheren Trennung der Produkte und minimaler Produktionsverzögerung, insbesondere in Kombination mit einer stromaufwärts angeordneten Produktionsmaschine ohne Umstellungspause und einer in Relation dazu schnelleren, stromabwärts angeordneten Produktionsmaschine mit Umstellungspause.

## Patentansprüche

1. Verfahren zur Produktumstellung in einer Abfüllanlage, das folgende Verfahrensschritte umfasst:
a) Zufördern eines ersten Produkts in einen Primärpuffer (15) mit einer Zufördervorrichtung (3), und Abfördern des ersten Produkts aus dem Primärpuffer mit einer Abfördervorrichtung (5);
c) Ausleiten eines zweiten Produkts von der Zufördervorrichtung in einen Sekundärpuffer (17), und gleichzeitiges Abfördern des im Primärpuffer befindlichen ersten Produkts mit der Abfördervorrichtung bis der Primärpuffer leer ist;
e) Abfördern des im Sekundärpuffer befindlichen zweiten Produkts mit der Abfördervorrichtung; und
f) Zufördern des zweiten Produkts in den Primärpuffer mit der Zufördervorrichtung, und Abfördern des zweiten Produkts aus dem Primärpuffer mit der Abfördervorrichtung.

2. Verfahren nach Anspruch 1,
**gekennzeichnet durch**
einen zusätzlichen Schritt b) vor dem Schritt c) , in dem eine von der Zufördervorrichtung aus gesehen stromaufwärts angeordnete Produktionsmaschine auf das zweite Produkt umgestellt wird.

3. Verfahren nach Anspruch 2,
**dadurch gekennzeichnet, dass**
die stromaufwärts angeordnete Produktionsmaschine bei der Produktumstellung weiter produziert.

4. Verfahren nach Anspruch 2 oder 3,
**dadurch gekennzeichnet, dass**
die Produktumstellung im Schritt b) an einer Etikettiermaschine erfolgt.

5. Verfahren nach einem der Ansprüche 1 bis 4,
**gekennzeichnet durch**
einen zusätzlichen Schritt d), der nach der Entleerung des Primärpuffers im Schritt c) ausgeführt wird, und in dem eine von der Abfördervorrichtung aus gesehen stromabwärts angeordnete Produktionsmaschine auf das zweite Produkt umgestellt wird.

6. Verfahren nach Anspruch 5,
**dadurch gekennzeichnet, dass**
die stromabwärts angeordnete Produktionsmaschine während des Schritts e) in Überleistung betrieben wird, so dass das zweite Produkt schneller aus dem Sekundärpuffer abgefördert als in den Sekundärpuffer eingeleitet wird.

7. Verfahren gemäß Anspruch 5 oder 6,
**dadurch gekennzeichnet, dass**
die Produktumstellung im Schritt d) an einer Verpackungsmaschine erfolgt.

8. Verfahren nach einem der Ansprüche 1 bis 7,
**dadurch gekennzeichnet, dass**
sich mindestens zwei Verfahrensschritte zeitlich teilweise überlappen.

9. Verfahren nach einem der Ansprüche 1 bis 8,
**dadurch gekennzeichnet, dass**
die Zufördervorrichtung kontinuierlich betrieben wird.

10. Puffersystem (1) zur Durchführung des Verfahren nach Anspruch 1 für die Produktumstellung in einer Abfüllanlage, das umfasst:
- eine Zufördervorrichtung (3) und eine Abfördervorrichtung (5);
- einen zwischen der Zufördervorrichtung und der Abfördervorrichtung angeordneten Primärpuffer (15);
- einen zwischen der Zufördervorrichtung und der Abfördervorrichtung sowie neben dem Primärpuffer angeordneten Sekundärpuffer (17);
- einer eingangsseitigen Weiche (21) mit einer ersten Stellung, in der die Zufördervorrichtung mit dem Einlaufbereich (19) des Primärpuffers verbunden ist, und mit einer zweiten Stellung, in der die Zufördervorrichtung mit dem Einlaufbereich (29) des Sekundärpuffers verbunden ist;
- einer ausgangsseitigen Weiche (27) mit einer ersten Stellung, in der der Auslaufbereich (25) des Sekundärpuffers nicht mit der Abfördervorrichtung verbunden ist, und mit einer zweiten Stellung, in der der Auslaufbereich des Sekundärpuffers mit der Abfördervorrichtung verbunden ist,
wobei die eingangsseitige Weiche (21) mit einer Steuereinheit verbindbar ist, die die Stellung der Weiche ändert, wenn dem Puffersystem anstelle eines ersten Produkts ein zweites Produkt zugefördert wird,
**dadurch gekennzeichnet, dass**
das Puffersystem eingerichtet ist, um das zweite Produkt in den Sekundärpuffer zu fördern und gleichzeitig das erste Produkt aus dem Primärpuffer abzufördern, bis der Primärpuffer leer ist.

11. Puffersystem nach Anspruch 10,
**dadurch gekennzeichnet, dass**
die ausgangsseitige Weiche (27) mit einer Steuereinheit verbindbar ist, die die Stellung der Weiche ändert, um aus dem Puffersystem anstelle eines ersten Produkts ein zweites Produkt abzufördern.

12. Puffersystem nach Anspruch 10 oder 11,
**dadurch gekennzeichnet, dass**
die eingangsseitige Weiche (21) und die ausgangsseitige Weiche (27) mit einer Steuereinheit verbunden werden können, die die Stellung der Weichen jeweils ändert, wenn das zweite Produkt anstelle aus dem Sekundärpuffer aus dem Primärpuffer abgefördert werden soll.

13. Puffersystem nach einem der Ansprüche 10 bis 12,
**gekennzeichnet durch**
- eine zwischen der Zufördervorrichtung und der Abfördervorrichtung parallel angeordnete mittlere Fördervorrichtung (7a - 7c); und
- ein im wesentlichen über der mittleren Fördervorrichtung angeordnetes inneres Führungsgeländer (9),
- wobei das Führungsgeländer den Primärpuffer vom Sekundärpuffer trennt, so dass zumindest eine der Fördervorrichtungen (3, 5, 7a, 7b und 7c) sowohl einen Bereich des Primärpuffers (15) als auch einen Bereich des Sekundärpuffers (17) bildet.

14. Puffersystem nach einem der Ansprüche 10 bis 13,
**dadurch gekennzeichnet, dass**
die Geschwindigkeit der Abfördervorrichtung variabel ist, so dass deren Förderleistung an die Überleistung einer stromabwärts angeordneten Produktionsmaschine angepasst werden kann.

15. Puffersystem gemäß nach einem der Ansprüche 10 bis 14,
**gekennzeichnet durch**
eine eingangsseitige Überwachungsvorrichtung (31), die überwacht, ob dem Puffersystem ein erstes Produkt oder ein zweites Produkt zugefördert wird.

16. Das Puffersystem gemäß einem der Ansprüche 10 bis 15,
**gekennzeichnet durch**
eine ausgangsseitige Überwachungsvorrichtung (33), die den Füllungsgrad des Sekundärpuffers überwacht.

17. Das Puffersystem gemäß einem der Ansprüche 10 bis 16,
**dadurch gekennzeichnet, dass**
die eingansseitige und die ausgangsseitige Weiche jeweils ein schwenkbares Führungsgeländer umfasst.

## Claims

1. Method for product changeover in a bottling plant, which comprises the following method steps:
a) feeding a first product into a primary buffer (15) by means of a feed device (3), and discharging the first product from the primary buffer by means of a discharge device (5);
c) channelling a second product from the feed device into a secondary buffer (17), and simultaneously discharging the first product located in the primary buffer by means of the discharge device until the primary buffer is empty;
e) discharging the second product located in the secondary buffer by means of the discharge device; and
f) feeding the second product into the primary buffer by means of the feed device, and discharging the second product from the primary buffer by means of the discharge device.

2. Method according to claim 1, **characterised by** an additional step b) prior to step c), in which a production machine that is arranged upstream when viewed from the feed device is changed over to the second product.

3. Method according to claim 2, **characterised in that** the upstream production machine continues production during the product changeover.

4. Method according to claim 2 or 3, **characterised in that** the product changeover in step b) takes place on a labelling machine.

5. Method according to one of claims 1 to 4, **characterised by** an additional step d) which is carried out after the emptying of the primary buffer in step c) and in which a production machine that is arranged downstream when viewed from the discharge device is changed over to the second product.

6. Method according to claim 5, **characterised in that** the downstream production machine is operated in overcapacity during step e) so that the second product is discharged from the secondary buffer more quickly than it is introduced into the secondary buffer.

7. Method according to claim 5 or 6, **characterised in that** the product changeover in step d) takes place on a packaging machine.

8. Method according to one of claims 1 to 7, **characterised in that** at least two method steps partially overlap in time terms.

9. Method according to one of claims 1 to 8, **characterised in that** the feed device is operated continuously.

10. Buffer system (1) for carrying out the method according to claim 1 for product changeover in a bottling plant, which comprises:
- a feed device (3) and a discharge device (5);
- a primary buffer (15) arranged between the feed device and the discharge device;
- a secondary buffer (17) arranged between the feed device and the discharge device and next to the primary buffer;
- an inlet-side gate (21) with a first position in which the feed device is connected to the inlet region (19) of the primary buffer, and with a second position in which the feed device is connected to the inlet region (29) of the secondary buffer;
- an outlet-side gate (27) with a first position in which the outlet region (25) of the secondary buffer is not connected to the discharge device, and with a second position in which the outlet region of the secondary buffer is connected to the discharge device,
wherein the inlet-side gate (21) can be connected to a control unit which changes the position of the gate if a second product is being fed to the buffer system instead of a first product,
**characterised in that** the buffer system is designed to convey the second product into the secondary buffer and simultaneously to discharge the first product from the primary buffer until the primary buffer is empty.

11. Buffer system according to claim 10, **characterised in that** the outlet-side gate (27) can be connected to a control unit which changes the position of the gate in order to discharge a second product from the buffer system instead of a first product.

12. Buffer system according to claim 10 or 11, **characterised in that** the inlet-side gate (21) and the outlet-side gate (27) can be connected to a control unit which respectively changes the position of the gates if the second product is to be discharged from the primary buffer instead of from the secondary buffer.

13. Buffer system according to one of claims 10 to 12, **characterised by**
- a central conveying device (7a - 7c) arranged in parallel between the feed device and the discharge device; and
- an inner guide railing (9) substantially arranged over the central conveying device,
- wherein the guide railing separates the primary buffer from the secondary buffer so that at least one of the conveying devices (3, 5, 7a, 7b and 7c) forms both a region of the primary buffer (15) and a region of the secondary buffer (17).

14. Buffer system according to one of claims 10 to 13, **characterised in that** the speed of the discharge device is variable so that the conveying capacity thereof can be adapted to the overcapacity of a downstream production machine.

15. Buffer system according to one of claims 10 to 14, **characterised by** an inlet-side monitoring device (31) which monitors whether a first product or a second product is being fed to the buffer system.

16. Buffer system according to one of claims 10 to 15, **characterised by** an outlet-side monitoring device (33) which monitors the fill level of the secondary buffer.

17. Buffer system according to one of claims 10 to 16, **characterised in that** the inlet-side and outlet-side gates each comprise a pivotable guide railing.

## Revendications

1. Procédé de changement de produit dans une installation de remplissage, qui comprend les étapes consistant :
a) à amener un premier produit dans une zone tampon primaire (15) à l'aide d'un dispositif d'amenée (3), et à évacuer le premier produit de la zone tampon primaire à l'aide d'un dispositif d'évacuation (5) ;
c) à sortir un second produit du dispositif d'amenée pour l'amener dans une zone tampon secondaire (17), et à évacuer en même temps le premier produit qui se trouve dans la zone tampon primaire, à l'aide du dispositif d'évacuation, jusqu'à ce que ladite zone tampon primaire soit vide ;
e) à évacuer le second produit qui se trouve dans la zone tampon secondaire, à l'aide du dispositif d'évacuation ; et
f) à amener le second produit dans la zone tampon primaire à l'aide du dispositif d'amenée, et à évacuer le second produit de la zone tampon primaire à l'aide du dispositif d'évacuation.

2. Procédé selon la revendication 1, **caractérisé par** une étape supplémentaire b), avant l'étape c), lors de laquelle une machine de production disposée en amont, vue du dispositif d'amenée, est modifiée pour le second produit.

3. Procédé selon la revendication 2, **caractérisé en ce que** la machine de production disposée en amont continue à produire lors du changement de produit.

4. Procédé selon la revendication 2 ou 3, **caractérisé en ce que** le changement de produit de l'étape b) a lieu sur une machine d'étiquetage.

5. Procédé selon l'une des revendications 1 à 4, **caractérisé par** une étape supplémentaire d) qui est exécutée une fois que la zone tampon primaire est vidée lors de l'étape c), et lors de laquelle une machine de production disposée en aval, vue du dispositif d'évacuation, est modifiée pour le second produit.

6. Procédé selon la revendication 5, **caractérisé en ce que** la machine de production disposée en aval fonctionne avec une surcapacité pendant l'étape e), de sorte que le second produit est évacué de la zone de tampon secondaire plus vite qu'il n'est introduit dans ladite zone tampon secondaire.

7. Procédé selon la revendication 5 ou 6, **caractérisé en ce que** le changement de produit de l'étape d) a lieu sur une machine d'emballage.

8. Procédé selon l'une des revendications 1 à 7, **caractérisé en ce qu'**au moins deux étapes de procédé se chevauchent en partie dans le temps.

9. Procédé selon l'une des revendications 1 à 8, **caractérisé en ce que** le dispositif d'amenée fonctionne en continu.

10. Système tampon (1) pour la mise en oeuvre du procédé selon la revendication 1 pour le changement de produit dans une installation de remplissage, qui comprend:
- un dispositif d'amenée (3) et un dispositif d'évacuation (5) ;
- une zone tampon primaire (15) disposée entre le dispositif d'amenée et le dispositif d'évacuation ;
- une zone tampon secondaire (17) disposée entre le dispositif d'amenée et le dispositif d'évacuation et près de la zone tampon primaire ;
- une aiguille côté entrée (21) avec une première position dans laquelle le dispositif d'amenée est relié à la zone d'entrée (19) de la zone tampon primaire, et une seconde position dans laquelle le dispositif d'amenée est relié à la zone d'entrée (29) de la zone tampon secondaire ;
- une aiguille côté sortie (27) avec une première position dans laquelle la zone de sortie (25) de la zone tampon secondaire n'est pas reliée au dispositif d'évacuation, et une seconde position dans laquelle la zone de sortie de la zone tampon secondaire est reliée au dispositif d'évacuation,
étant précisé que l'aiguille côté entrée (21) est apte à être reliée à une unité de commande qui change la position de l'aiguille quand un second produit est amené dans le système tampon au lieu du premier produit,
**caractérisé en ce que** le système tampon est installé pour amener le second produit dans la zone tampon secondaire et pour évacuer en même temps le premier produit de la zone tampon primaire jusqu'à ce que celle-ci soit vide.

11. Système tampon selon la revendication 10, **caractérisé en ce que** l'aiguille côté sortie (27) est apte à être reliée à une unité de commande qui change la position de l'aiguille pour évacuer un second produit du système tampon au lieu d'un premier produit.

12. Système tampon selon la revendication 10 ou 11, **caractérisé en ce que** l'aiguille côté entrée (21) et l'aiguille côté sortie (27) peuvent être reliées à une unité de commande qui modifie la position des aiguilles quand le second produit doit être évacué de la zone tampon primaire, à la place de la zone tampon secondaire.

13. Système tampon selon l'une des revendications 10 à 12, **caractérisé par**
- un convoyeur central (7a-7c) disposé parallèlement entre le dispositif d'amenée et le dispositif d'évacuation ; et
- une rampe de guidage intérieure (9) disposée globalement au-dessus du convoyeur central,
- étant précisé que la rampe de guidage sépare la zone tampon primaire de la zone tampon secondaire, de sorte que l'un au moins des convoyeurs (3, 5, 7a, 7b et 7c) forme à la fois une partie de la zone tampon primaire (15) et une partie de la zone tampon secondaire (17).

14. Système tampon selon l'une des revendications 10 à 13, **caractérisé en ce que** la vitesse du dispositif d'évacuation est variable, de sorte que sa capacité peut être adaptée à la surcapacité d'une machine de production disposée en aval.

15. Système tampon selon l'une des revendications 10 à 14, **caractérisé par** un dispositif de surveillance côté entrée (31) qui vérifie si c'est un premier produit ou un second produit qui est amené dans le système tampon.

16. Système tampon selon l'une des revendications 10 à 15, **caractérisé par** un dispositif de surveillance côté sortie (33) qui surveille le degré de remplissage de la zone tampon secondaire.

17. Système tampon selon l'une des revendications 10 à 16, **caractérisé en ce que** les aiguilles côté entrée et côté sortie comprennent chacune une rampe de guidage pivotante.
